# EUROPÄISCHE PATENTSCHRIFT

(11) **EP 0 954 052 B1**
(45) Veröffentlichungstag und Bekanntmachung des Hinweises auf die Patenterteilung: **31.12.2008**
(21) Anmeldenummer: 99108197.7
(22) Anmeldetag: 27.04.1999
(51) Int. Cl.: H01Q 1/42, H01Q 1/44

(54) **Verfahren zur Herstellung eines Radoms für ein Abstandswarnradar**
Fabrication method for a radome of a distance measurement radar
Procédé de fabrication pour radome d' un radar de mesure de distance

(30) Priorität: 02.05.1998 DE 19819709
(43) Veröffentlichungstag der Anmeldung: 03.11.1999
(73) Patentinhaber: Daimler AG, 70327 Stuttgart (DE)
(72) Erfinder: Leinweber, Ulrich, 73087 Boll (DE); Lauer, Wolfgang, 74074 Heilbronn (DE); Zimmermann, Werner, 85640 Putzbrunn (DE)

(56) Entgegenhaltungen:
- EP-A- 1 045 471
- DE-A- 4 003 057
- DE-A- 10 028 801
- DE-A- 10 053 517
- GB-A- 757 128
- GB-A- 2 303 011
- US-A- 4 155 896
- US-A- 5 487 575
- US-A- 5 633 105
- US-A- 5 738 750
- US-B1- 6 328 358

## Beschreibung

Die Erfindung bezieht sich auf ein Verfahren zur Herstellung eines Radoms für ein Abstandswarnradar sowie auf ein Radom für ein Abstandswarnradar gemäß den Oberbegriffen der unabhängigen Ansprüche.

Aus der DE 40 03 057 A1 ist ein Radarsensor bekannt, der in einen Außenrückspiegel eines Fahrzeugs integriertet ist. Bei diesem Außenrückspiegel kann die Spiegelfläche als Radom fungieren, sofern eine Spiegelverstellung nicht erforderlich ist. Die Spiegelfläche ist als Glasträger mit einer darauf aufgebrachten metallischen Schicht ausgeführt. Zur Gewährleistung der Radartransparenz ist die Dicke des Glasträgers an die Wellenlänge der verwendeten Radarfrequenz angepaßt und die metallische Schicht in Segmente unterteilt, die durch dünne, nicht metallisierte und den optischen Gesamteindruck nicht beeinträchtigende Bereiche voneinander getrennt sind. Die Lichtreflexion kann alternativ auch durch mehrere auf den Glasträger aufgebrachte dielektrische Schichten bewirkt werden.

Aus der GB 2 303 011 A ist ein als dielektrische Platte ausgeführtes Radom bekannt, das an einer Motorhaube, einem Scheinwerfer oder Stoßfänger eines Fahrzeugs angeordnet ist.

Nach heutigem Stand der Technik werden Radarradome so ausgelegt, daß die Dicke des Radoms in Verbindung mit der dielektrischen Stoffkonstante auf die Wellenlänge der verwendeten Frequenz abgestimmt ist, so daß die Reflexionsverluste an Grenzflächen und die Absorptionsverluste an Grenzflächen und die Absorptionsverluste im Radommaterial möglichst gering sind.

Ein bestimmtes Design bzw. die Darstellung eines Markenemblems in erhabener Form innerhalb einer visuell teiltransparenten Radomstruktur wie für das Abstands-Warn-Radar (AWS) ist bisher nicht bekannt.

Neu ist ebenfalls die kratzfeste Oberfläche aus SiO₂ oder auf einem bzw. in Kombination mit einem Radom. Diese kratzfeste SiO₂-Schicht kann mittels Sol-Gel-Technik oder mittels Chemical Vapour Deposition (CVD = Abscheiden von Materialschichten (auf einem Substrat aus der Gasphase)) aufgebracht werden.

Der vorliegenden Erfindung liegt die Aufgabe zugrunde, ein Verfahren der eingangs genannten Art zu schaffen, womit charakteristische Strukturen bestimmter Erscheinung bei gleichzeitig voller Radartransparenz die Ausbreitung von Radarwellen nicht beeinflussen und die Abbildungseigenschaften des Radoms voll erhalten bleiben.

Diese Aufgabe wird durch die in den Ansprüchen 1, 6 und 13 aufgezeigten Maßnahmen gelöst. In den Unteransprüchen sind Ausgestaltungen und Weiterbildungen angegeben und in der nachfolgenden Beschreibungen sind Ausführungsbeispiele erläutert. Diese Erläuterungen werden durch die Figuren der Zeichnung ergänzt. Es zeigen:
- Fig. 1: ein Ausführungsbeispiel eines Radoms in Form eines Markenemblems, in perspektivischer Ansicht,
- Fig. 2: ein Ausführungsbeispiel eines Radoms gemäß Fig. 1 im Querschnitt,
- Fig. 3: ein weiteres Ausführungsbeispiel eines Radoms in Tiefziehtechnik in perspektivischer Ansicht,
- Fig. 4: ein Diagramm in Bezug auf die Schwächung von Radarwellen bei der Transmission durch eine gesputterte Metallschicht,
- Fig. 5: ein Diagramm bezüglich der Sputterdauer und Schichtdicke für Chrom auf Polycarbonat.

Der allgemeine Erfindungsgedanke sieht vor, Markenembleme oder charakteristische Strukturen von Kfz-Teilen in beispielsweise metallischer, chromglänzender Erscheinung, bei gleichzeitiger voller Radartransparenz ohne Beeinflussung der Ausbreitung von Radarwellen durch Beugung, Brechung, Streuung und Reflexion integriert darzustellen, wobei die Abbildungseigenschaften des Radoms voll erhalten bleiben. Hierbei kann das Radom auch die Form und Funktion einer Linse haben.

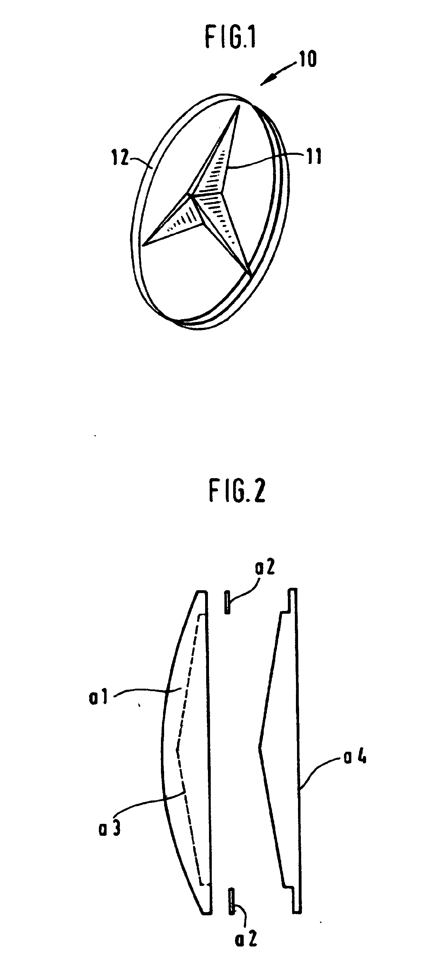

Das in den Fig. 1 und 2 dargestellte Firmenemblem 10 kann nun als Radom wie folgt ausgebildet sein: In bekannter Weise setzt es sich aus einem Stern 11 und einem ihn umschließenden Ring 12 zusammen. Der dreizackige Stern 11 ist chromfarben beschichtet, radartransparent und in einer transparenten Deckschicht eingebettet. Der Ring 12 ist ein transparenter Thermoplast, der dunkelfarbig, opaque oder entsprechend beschichtet ist. Vorzugsweise wird er mit einer kratzfesten Beschichtung versehen. Das vorgenannte Radom besteht also aus einer radar- und visuell transparenten Deckplatte al mit geringen dielektrischen Verlusten - beispielsweise aus Polykarbonat. In dieser Deckplatte wird nun die Struktur bzw. das Markenemblem in seiner Negativform a2 integriert, das heißt, es wird von der Rückseite her gesehen in seiner vertieften Form gezeigt. Die Rückseite der Deckplatte a1 wird vorzugsweise mit einer Maske aus einem schwarzen Lack versehen, so daß bei dem folgenden Arbeitsgang zur metallischen Beschichtung des Emblems 10 oder der Struktur die Restflächen Rf abgedeckt sind.

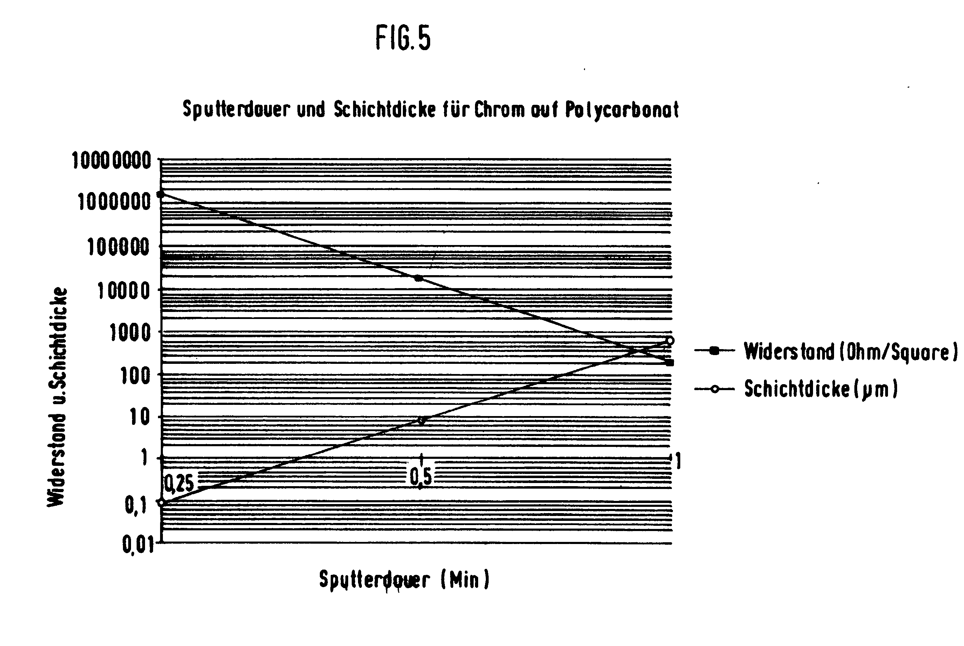

Die Form des Markenemblems 10 wird mit einer metallischen oder metallisch glänzenden Schicht a3 versehen. Diese Schicht ist so dünn gehalten, daß im sichtbaren Wellenlängenbereich die elektromagnetische Strahlung beziehungsweise das Licht vollständig reflektiert wird, jedoch die längerwelligen Radarwellen fast ungeschwächt hindurchtreten. Die Dicke der metallischen Beschichtung ist für verschiedene metallische Beschichtungswerkstoffe experimentell ermittelbar, ein Diagramm hierfür ist in Fig. 5 gegeben.

Um nun Verzerrungen des durchtretenden elektromagnetischen Feldes aufgrund der Geometrie der rückseitigen Oberfläche zu verhindern, wird auf die Rückseite der transparenten teilbeschichteten Deckplatte a1 eine weitere dunkeleingefärbte Polykarbonatschicht a4 aufgespritzt oder eine Platte aus Polykarbonat formschlüssig aufgeklebt. Es versteht sich von selbst, daß hierbei zwischen den Grenzschichten keine Inhomogenitäten durch Luftblasen etc. entstehen dürfen.

Zum Schutz der Radomoberfläche vor mechanischen oder chemischen Einflüssen wird mittels Chemical Vapour Deposition eine radartransparente, nur wenige µm dicke keramische Deckschicht aus SiO₂ aufgebracht. Kratzfeste radartransparente Beschichtungen können in bekannter Weise auch mit Hilfe der Lackier- oder der SolGel-Technik aufgebracht werden. Für die Deckplatte a1 des Radoms und die Hinterspritzung werden nur Werkstoffe verwendet, die sich in ihrer Dielektrizitätskonstante nicht oder nur geringfügig unterscheiden und wie in der Radombauweise üblich, ist die Dicke desselben auf die Wellenlänge der entsprechenden Radarfrequenz und auf den Einfallswinkel abgestimmt, um eine konstruktive Inferenz im Radommaterial sicherzustellen.

Als Resultat der vorstehend vorgeschlagenen Maßnahmen erscheint nun das im glasklaren Polykarbonat a1 eingebettete metallisch glänzende Objekt a2 für den Betrachter in der Aufsicht vor einem dunklen Hintergrund. Aufgrund der Homogenität des Körpers im Auflösungsbereich der Wellenlänge erscheint der Werkstoff des Radoms für die Radarwelle als homogen.

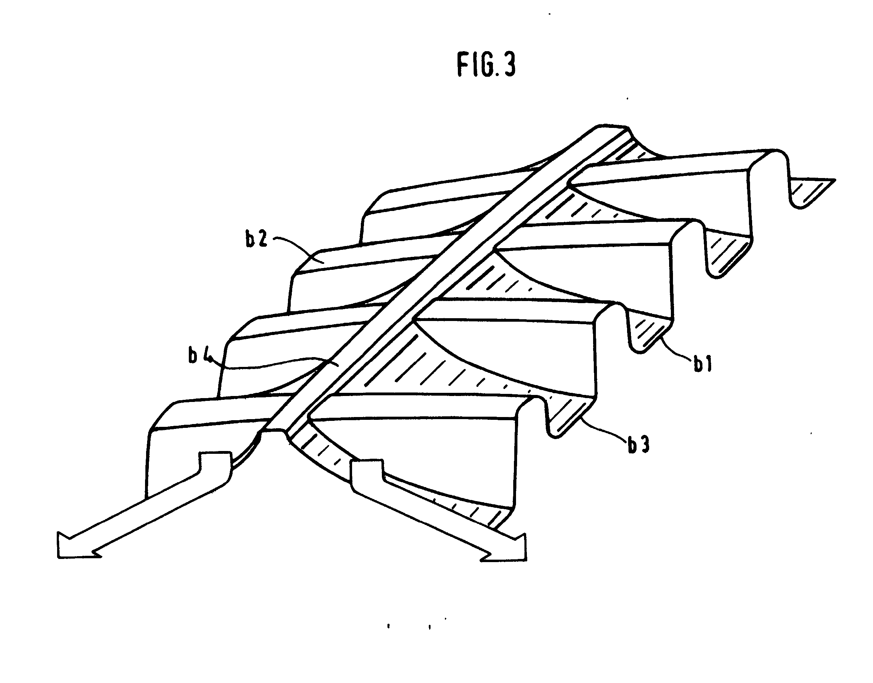

Ist vorstehend an einem Ausführungsbeispiel die Radombauweise für das Abstands-Warn-Radar erläutert, so folgt nun die Beschreibung der in der Figur 3 der Zeichnung dargestellten Radombauweise in Tiefziehtechnik. Das zu verwendende Ausgangsmaterial für das Radom besteht aus einem radartransparenten, steifen aber dünnen Folienmaterial b1. Wie in der Tiefzieh- und Blistertechnik üblich, wird das Folienmaterial bei gleichzeitiger Erwärmung und mit Hilfe eines Vakuums über eine Form gezogen, die der gewünschten darzustellenden Geometrie entspricht. In dem gezeigten Ausführungsbeispiel hat das Formwerkzeug die Geometrie eines Kühlergrills b1, wobei die Form so zu wählen ist, daß nur wenige Teilstrahlen der durchtretenden Radarwellen schräg oder streifend auf die Flächen des Dielektrikums beziehungsweise der Folie treffen.

Zur Darstellung metallischer Teile wird die Folie vor oder nach der Formgebung mit einer metallischen Schicht b2 bedampft oder besputtert. Auch eine Beschichtung mit speziellen, metallisch glänzenden, nichtmetallischen Lacken ist möglich. Wesentlich ist, daß die Form so gestaltet ist, daß sie keinerlei Nischen oder Vertiefungen aufweist, in denen sich aufgrund des Fahrtwindes Wasser oder Schneee ansammeln kann, sondern dies automatisch durch den Winddruck von dem Radom automatisch abgeleitet werden kann, wie in Fig. 3 zu b3 veranschaulicht, wo die gezeigte Kühlergrillstruktur seitlich geöffnet ist, um Regenwasser und Schnee ableiten zu können. Mit b2 ist die chromfarbene Bedampfung oder Besputterung der Radomstruktur bezeichnet und mit b4 die transparente Schutzschicht.

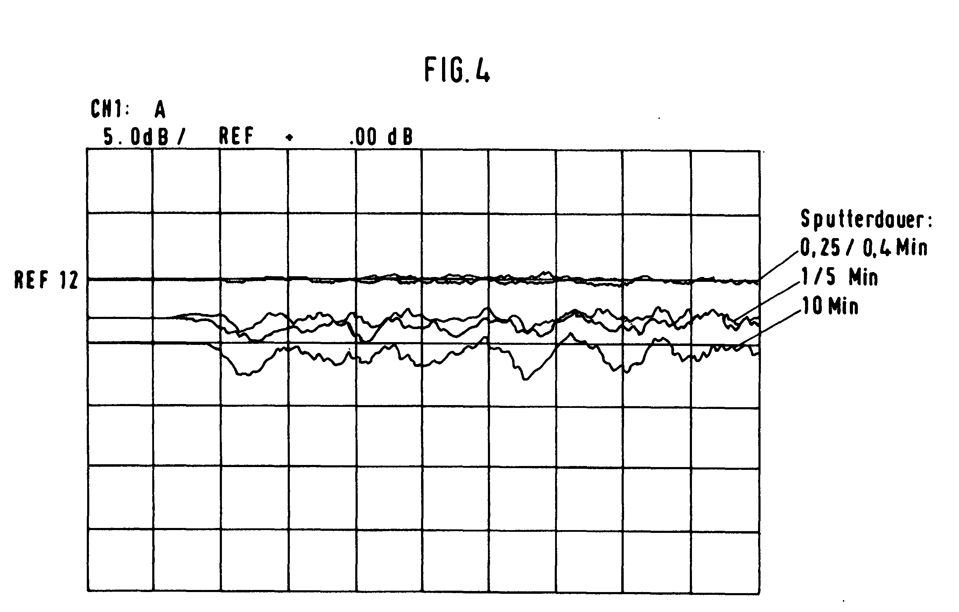

Die metallisch glänzenden Bereiche werden - wie bereits erwähnt - aufgedruckt, aufgesputtert oder aufgedampft. Die Dicke der metallischen Schicht wird beispielsweise als Funktion der Sputterdauer so gewählt , daß für Radarfrequenzen noch eine volle Transparenz sichergestellt und gewährleistet ist. Dies geschieht über die Kontrolle des ohmschen Widerstandes der Metallschicht oder mit Hilfe von Transmissionsmessungen bei Mikrowellenfrequenzen oder über die Dauer des Beschichtungsprozesses. Informationen hierüber werden durch die Diagramme in den Figuren 4 und 5 der Zeichnung gegeben.

Abschließend empfiehlt sich zum Schutz der metallischen Beschichtung vor korrosiven und mechanischen Einflüssen einen kratzfesten Lack auf die Metallschicht aufzubringen oder eine SiO₂- Schicht b4 mittels Chemical Vapour-Deposition hierfür zu verwenden.

Die vorbeschriebenen radartransparenten Verfahrensweisen zeichnen sich dadurch aus, daß metallische Strukturen durch die Beschichtung von Konturen mit metallischen Werkstoffen oder mit nichtmetallischen, aber durch Interferenzeffekte metallisch glänzende Lacke dargestellt werden können, ohne die Abbildungseigenschaften wesentlich zu beeinflussen. Somit ist die Integration eines Markenzeichens oder charakteristischer Strukturformen möglich und sichert beispielsweise bei Abstandswarngeräten deren einwandfreie Funktion.

## Patentansprüche

1. Verfahren zur Herstellung eines Radoms für Radarfrequenzen eines Abstandswarnradars, wobei das Radom mit einer metallischen oder metallisch glänzenden Schicht (a3) versehen ist,
**dadurch gekennzeichnet,**
**daß** zur Darstellung eines Emblems (10) oder einer charakteristischen Struktur (b1) bei voller Radartransparenz dieses Emblem (10) oder diese Struktur (b1) in einer radar- und visuell transparenten Deckplatte (a1) in einer Negativform eingelassen wird und daß diese Form mit der metallischen oder metallisch glänzenden Schicht (a3) versehen wird, und daß die metallische oder metallisch glänzende Schicht (a3) in ihrer Stärke so gehalten ist, daß im sichtbaren Wellenlängenbereich die elektromagnetische Strahlung vollständig reflektiert wird und die längerwelligen Radarwellen nahezu ungeschwächt hindurchtreten.

2. Verfahren nach Anspruch 1,
**dadurch gekennzeichnet, daß**
die Rückseite der Deckplatte (a1) vor der Beschichtung mit einer dunklen Schicht oder Maske versehen wird um die Restflächen abzudecken.

3. Verfahren nach Anspruch 1 oder 2,
**dadurch gekennzeichnet, daß**
die Deckplatte (a1) aus Polykarbonat gebildet wird.

4. Verfahren nach einem der Ansprüche 1 bis 3,
**dadurch gekennzeichnet, daß**
die Rückseite der transparenten Deckplatte (a1) mit einer aufgespritzten Polykarbonatschicht (a4) oder einem Kunststoff mit ähnlich dielektrischen Eigenschaften versehen wird, oder mit einer Polykarbonatplatte verklebt wird.

5. Verfahren nach einem der Ansprüche 2 bis 4,
**dadurch gekennzeichnet, daß**
die dunkle Schicht von einem schwarzen Lack gebildet wird.

6. Verfahren zur Herstellung eines Radoms für Radarfrequenzen eines Abstandswarnradars, wobei das Radom mit einer metallischen oder metallisch glänzenden Schicht (a3) versehen ist,
**dadurch gekennzeichnet,**
**daß** zur Darstellung eines Emblems (10) oder einer charakteristischen Struktur (b1) bei voller Radartransparenz ein Folienmaterial bei gleichzeitiger Erwärmung und mit Hilfe eines Vakuums über eine die gewünschte Struktur bildende Form gepresst wird, daß aus dem radartransparenten dünnen, mit einer gewissen Steifigkeit versehenen Folienmaterial das Radom gebildet wird, wobei das Folienmaterial mit einer metallischen Schicht (b2) oder einem metallisch glänzenden, nichtmetallischen Lack versehen wird, deren bzw. dessen Stärke so gehalten ist, daß im sichtbaren Wellenlängenbereich die elektromagnetische Strahlung vollständig reflektiert wird und die längerwelligen Radarwellen nahezu ungeschwächt hindurchtreten.

7. Verfahren nach einem der vorhergehenden Ansprüche,
**dadurch gekennzeichnet, daß**
die Radomoberfläche mit einer wenige µm dicken, radartransparenten keramischen Deckschicht aus SiO₂ versehen ist.

8. Verfahren nach einem der vorhergehenden Ansprüche,
**dadurch gekennzeichnet, daß**
die Dicke des Radoms auf die Wellenlänge der entsprechenden Radarfrequenz des Abstandswarnradars und auf den Einfallwinkel abgestimmt ist.

9. Verfahren nach einem der Ansprüche 6 bis 8,
**dadurch gekennzeichnet, daß**
die Form der Struktur (b1) so konzipiert ist, dass nur wenige Teilstrahlen der durchtretenden Radarwellen schräg oder streifend auf die Flächen des Dielektrikums oder der Folie treffen.

10. Verfahren nach einem der vorhergehenden Ansprüche,
**dadurch gekennzeichnet, daß**
zur Darstellung metallischer Strukturteile metallisch glänzende, nichtmetallische Lacke verwendet werden.

11. Verfahren nach einem der vorhergehenden Ansprüche,
**dadurch gekennzeichnet, daß**
die metallische Schicht (a3; b2) mit einem kratzfesten Lack oder mit einer SiO₂-Schicht (b4) versehen wird.

12. Verfahren nach einem der Ansprüche 6 bis 11,
**dadurch gekennzeichnet, daß**
metallisch glänzende Strukturbereiche aufgedruckt, aufgesputtert oder aufgedampft werden.

13. Radom für ein Abstandswarnradar aus einem radartransparenten Material (a1; b1) mit einer Metall aufweisenden metallisch glänzende Schicht (a3; b2),
**dadurch gekennzeichnet, daß**
das radartransparente Material eine Form (a2) zur Darstellung eines Emblems (10) oder einer charakteristischen Struktur umfasst, die mit der Metall aufweisenden metallisch glänzenden Schicht (a3; b2) versehen ist, wobei die Schichtdicke so gewählt ist, dass elektromagnetische Strahlung bei Radarfrequenzen nahezu ungeschwächt hindurchtreten.

14. Radom nach Anspruch 13,
**dadurch gekennzeichnet, daß**
das radartransparente Material (a1) als visuell transparente Deckplatte ausgestaltet ist, wobei die Form (a2) als Negativform in der Deckplatte integriert ist.

15. Radom nach Anspruch 13,
**dadurch gekennzeichnet, daß**
das radartransparente Material (a1) als dünnes, mit einer gewissen Steifigkeit versehenes Folienmaterial ausgestaltet ist, wobei die Form (a2) durch Erwärmung und Pressen mittels Vakuum über die gewünschte Struktur gegeben ist.

16. Radom nach einem der Ansprüche 13 bis 15, **gekennzeichnet, durch**
eine radartransparente keramische Deckschicht aus SiO₂.

## Claims

1. Method for the production of a radome for radar frequencies of a proximity radar, the radome being provided with a metallic or metallically bright coating (a3),
**characterised in that**,
for the representation of an emblem (10) or a characteristic structure (b1) at full radar transparency, the said emblem (10) or the said structure (b1) is embedded in a negative mould into a radar- and visually transparent cover plate (a1), **in that** the said mould is provided with the metallic or metallically bright coating (a3), and **in that** the thickness of the metallic or metallically bright coating (a3) is chosen such that that the electromagnetic radiation is fully reflected in the visible wavelength range and the longer radar waves pass through virtually without attenuation..

2. Method according to claim 1,
**characterised in that**
the rear side of the cover plate (a1) is provided with a dark coating or mask before the application of the coating to cover the residual surfaces.

3. Method according to claim 1 or 2,
**characterised in that**
the cover plate (a1) is made of polycarbonate.

4. Method according to any of claims 1 to 3,
**characterised in that**
the rear side of the transparent cover plate (a1) is provided with a sprayed-on polycarbonate coating (a4), or with a plastic material with similar dielectric properties, or is bonded to a polycarbonate plate.

5. Method according to any of claims 2 to 4,
**characterised in that**
the dark coating is represented by a black paint.

6. Method for the production of a radome for radar frequencies of a proximity radar, the radome being provided with a metallic or metallically bright coating (a3),
**characterised in that**,
for the representation of an emblem (10) or a characteristic structure (b1) at full radar transparency, a film material is pressed over a mould representing the desired structure with the aid of a vacuum and accompanied by heating, **in that** the radome is formed from the radar-transparent, thin film material, which has a certain rigidity, and wherein the film material is provided with a metallic coating (b2) or with a metallically bright, non-metallic paint, the thickness of which is chosen such that that the electromagnetic radiation is fully reflected in the visible wavelength range and the longer radar waves pass through virtually without attenuation.

7. Method according to any of the preceding claims,
**characterised in that**
the radome surface is provided with a radar-transparent ceramic SiO₂ finish with a thickness of a few µm.

8. Method according to any of the preceding claims,
**characterised in that**
the thickness of the radome is matched to the wavelength of the corresponding radar frequency of the proximity radar and to the angle of incidence.

9. Method according to any of claims 6 to 8,
**characterised in that**
the mould of the structure (b1) is designed such that only a few partial beams of the penetrating radar waves hit the surface of the dielectric or the film at an angle or glancingly.

10. Method according to any of the preceding claims,
**characterised in that**
metallically bright, non-metallic paints are used to represent metallic structure parts.

11. Method according to any of the preceding claims,
**characterised in that**
the metallic coating (a3; b2) is provided with a scratch-resistant paint or an SiO₂ coating.

12. Method according to any of claims 6 to 11,
**characterised in that**
metallically bright structure areas are applied by printing, sputtering or vapour deposition.

13. Radome for a proximity radar, made from a radar-transparent material (a1; b1) with a metal-containing, metallically bright coating (a3; b2),
**characterised in that**
the radar-transparent material comprises a mould (a2) for the representation of an emblem (10) or a characteristic structure, which is provided with the metal-containing, metallically bright coating (3a; b2), wherein the thickness of the coating is chosen such that that the electromagnetic radiation is fully reflected in the visible wavelength range and the longer radar waves pass through virtually without attenuation.

14. Radome according to claim 13,
**characterised in that**
the radar-transparent material (a1) is designed as a visually transparent cover plate, the mould (a2) being integrated into the cover plate as a negative mould.

15. Radome according to claim 13,
**characterised in that**
the radar-transparent material is a thin film material with a certain rigidity, the mould (a2) being placed over the desired structure by means of heating and pressing with the aid of a vacuum.

16. Radome according to any of claims 13 to 15,
**characterised by**
a radar-transparent, ceramic SiO₂ finish.

## Revendications

1. Procédé de fabrication d'un radôme pour des radiofréquences d'un radar de mesure de distance, le radôme étant pourvu d'une couche (a3) métallique ou métallisée, **caractérisé en ce que** pour la représentation d'un emblème (10) ou d'une structure (b1) caractéristique, en cas de pleine transparence aux ondes radio, cet emblème (10) ou cette structure (b1) est encastrée dans une plaque de recouvrement (a1) transparente au radar et visuellement dans une forme négative et **en ce que** cette forme est pourvue de la couche (a3) métallique ou métallisée, et **en ce que** la couche (a3) métallique ou métallisée est maintenue dans son épaisseur de sorte que dans la gamme d'ondes visible, le rayonnement électromagnétique soit totalement réfléchi et les ondes radar plus longues passent presque non atténuées.

2. Procédé selon la revendication 1, **caractérisé en ce que** le côté arrière de la plaque de recouvrement (a1) est pourvu avant le revêtement d'une couche sombre ou d'un masque afin de recouvrir les surfaces restantes.

3. Procédé selon la revendication 1 ou 2, **caractérisé en ce que** la plaque de recouvrement (a1) est en polycarbonate.

4. Procédé selon l'une quelconque des revendications 1 à 3, **caractérisé en ce que** le côté arrière de la plaque de recouvrement (a1) transparente au est pourvu d'une couche de polycarbonate (a4) injectée ou d'une matière synthétique aux propriétés diélectriques semblables, ou est collé à une plaque de polycarbonate.

5. Procédé selon l'une quelconque des revendications 2 à 4, **caractérisé en ce que** la couche sombre est constituée par une laque noire.

6. Procédé de fabrication d'un radôme pour des radiofréquences d'un radar de mesure de distance, le radôme étant pourvu d'une couche (a3) métallique ou métallisée, **caractérisé en ce que** pour la représentation d'un emblème (10) ou d'une structure (b1) caractéristique, en cas de pleine transparence aux ondes radio, un matériau de film est pressé lors de l'échauffement simultané et à l'aide d'un vide au-dessus d'une forme formant la structure souhaitée, **en ce que** le radôme est formé dans le matériau de film fin, transparent aux ondes radio et pourvu d'une certaine rigidité, le matériau de film étant pourvu d'une couche (b2) métallique ou d'une laque métallisée ou non-métallique, dont l'épaisseur est maintenue de sorte que dans la gamme d'ondes visible, le rayonnement électromagnétique soit totalement réfléchi et les ondes radar plus longues passent presque non atténuées.

7. Procédé selon l'une quelconque des revendications précédentes, **caractérisé en ce que** la surface de radôme est pourvue d'une couche de recouvrement céramique en SiO₂ épaisse de quelques µm et transparente aux ondes radio.

8. Procédé selon l'une quelconque des revendications précédentes, **caractérisé en ce que** l'épaisseur du radôme est ajustée à la longueur d'onde de la radiofréquence correspondante du radar de mesure de distance et à l'angle d'incidence.

9. Procédé selon l'une quelconque des revendications 6 à 8, **caractérisé en ce que** la forme de la structure (b1) est conçue de sorte que seuls quelques rayons partiels des ondes radio passantes rencontrent en biais ou de manière rasante les surfaces du diélectrique ou du film.

10. Procédé selon l'une quelconque des revendications précédentes, **caractérisé en ce que** des laques métallisées ou non-métalliques sont utilisées pour la représentation de parties structurelles métalliques.

11. Procédé selon l'une quelconque des revendications précédentes, **caractérisé en ce que** la couche métallique (a3 ; b2) est pourvue d'une laque résistante aux rayures ou d'une couche de SiO₂ (b4).

12. Procédé selon l'une quelconque des revendications 6 à 11, **caractérisé en ce que** des zones structurelles métallisées sont imprimées, pulvérisées ou déposées en phase gazeuse sous vide.

13. Radôme pour un radar de mesure de distance en un matériau (a1 ; b1) transparent aux ondes radio avec une couche (a3 ; b2) métallisées présentant du métal, **caractérisé en ce que** le matériau transparent aux ondes radio comporte une forme (a2) pour la représentation d'un emblème (10) ou d'une structure caractéristique, qui est pourvue de la couche (a3 ; b2) métallisée présentant du métal, l'épaisseur de couche étant choisie de sorte que des rayonnements électromagnétiques passent presque non atténués en cas de radiofréquences.

14. Radôme selon la revendication 13, **caractérisé en ce que** le matériau (a1) transparent aux ondes radio est configuré comme une plaque de recouvrement visuellement transparente, la forme (a2) étant intégrée comme une forme négative dans la plaque de recouvrement.

15. Radôme selon la revendication 13, **caractérisé en ce que** le matériau (a1) transparent aux ondes radio est configuré comme un matériau de film fin, pourvu d'une certaine rigidité, la forme (a2) étant donnée par échauffement et pressage au moyen d'un vide au-dessus de la structure souhaitée.

16. Radôme selon l'une quelconque des revendications 13 à 15, **caractérisé par** une couche de recouvrement céramique en SiO₂ et transparente aux ondes radio.
